# EUROPEAN PATENT SPECIFICATION

(11) **EP 0 586 701 B1**
(45) Date of publication and mention of the grant of the patent: **06.05.1998**
(21) Application number: 92910721.7
(22) Date of filing: 29.05.1992
(51) Int. Cl.: E04H 9/02, E04B 1/98

(54) **VIBRATION CONTROL DEVICE FOR STRUCTURE**
SCHWINGUNGSKONTROLLVORRICHTUNG FÜR BAUTEN
DISPOSITIF DE PROTECTION DE STRUCTURES CONTRE LES VIBRATIONS

(30) Priority: 29.05.1991 JP 125741/91
(43) Date of publication of application: 16.03.1994
(73) Proprietor: KAJIMA CORPORATION, Tokyo 107 (JP)
(72) Inventor: NISHIMURA, Isao, c/o Kajima Corporation, Minatoku Tokyo 107 (JP); SAKAMOTO, Mitsuo, c/o Kajima Corporation, Minatoku Tokyo 107 (JP); SASAKI, Katsuyasu, c/o Kajima Corporation, Minatoku Tokyo 107 (JP)
(74) Representative: Godwin, Edgar James
(86) International application number: PCT/JP92/00704
(87) International publication number: WO 92/21840

(56) References cited:
- JP-A- 3 169 984
- JP-A- 4 157 233
- JP-A-63 297 837

## Description

### (Technical Field)

This invention relates to a vibration control device of an active type for reducing the response of a structure due to earthquake and wind or the like by applying a control force on the structure and is suitable to the vibration control for a large scale structure with a comparatively long natural period, such as a multi-story building or a super multi-story building.

### (Background Art)

A dynamic damper (designated as DD thereafter) is available as a vibration control device of a passive type, and there are descriptions as an application thereof to structures, e.g., Japanese Pat. Laid-open No. 63-76932 and Japanese Pat. Publication No. 3-38686.

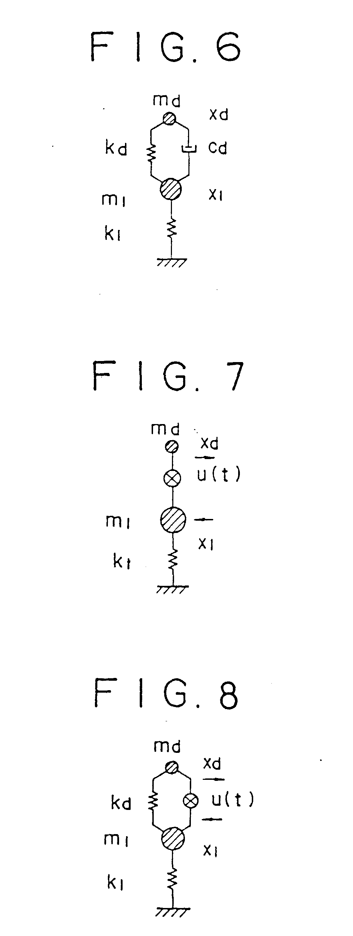

Fig. 6 shows a vibration model of a DD to be applied to a structure, wherein m₁ is a mass of a main body of a structure constituting a main vibration system and m_{d} is a mass of an additional mass body constituting a damping system. Also, k₁ is a spring constant of the main body of the structure, and the main body of the structure having a mass m₁ and the additional mass body having a mass m_{d} are mutually connected through a spring having a spring constant k_{d} and a damper having a damping coefficient c_{d}. Further, x₁ represents a displacement of the structure, and x_{d} represents a displacement of a weight.

A natural angular frequency of the main vibration system is given by:${\text{ω}}_{\text{1}} {\text{= (k}}_{\text{1}} {\text{/m}}_{\text{1}} {\text{)}}^{\text{1/2}}$

In the DD, a mass m_{d} of the damping system is designed so that the ratio of the mass m_{d} to the mass m₁ of the main vibration system may be set to be or equal to:${\text{µ = m}}_{\text{d}} {\text{/m}}_{\text{1}} \text{≧ 0.01.}$

At this time, the natural angular frequency of the damping system is given by:${\text{ω}}_{\text{d}} {\text{= (1/1 + µ) ω}}_{\text{1}}$

A damping coefficient c_{d} and a damping factor h_{d} are respectively represented by:${\text{c}}_{\text{d}} {\text{= 2m}}_{\text{d}} {\text{ω}}_{\text{d}} {\text{h}}_{\text{d}}$${\text{h}}_{\text{d}} {\text{= [3µ/8 (1 + µ)]}}^{\text{1/2}}$

There are some descriptions designated as AMD (the abbreviation of Active Mass Driver) as an active type vibration control device, e.g., US. Pat. No. 5,022,201 (Japanese Pat. Laid-open Nos.1-275866, 1-275867, 1-2758868 and 1-275869).

Fig. 7 shows a vibration model of an AMD which applies a control force u(t) due to the hydraulic power or electromagnetic force of an actuator on between a main body of the structure having a mass m₁ and an additional mass body having a mass m_{d} to actively control the vibration of the structure.

In the AMD, assuming that a spring between the main body of the structure and the additional mass body constituting a vibration control device is set under a soft condition, i.e.,${\text{ω}}_{\text{d}} {\text{≦ (1/2) ω}}_{\text{1}}$ the control force u (t) is given in the following equation,${\text{u(t) = G}}_{\text{1}} {\text{(dx}}_{\text{1}} {\text{/d}}_{\text{t}} {\text{) + G}}_{\text{2}} {\text{(dx}}_{\text{d}} \text{/dt)}$ wherein Gl is a gain in a circuit including an AGC circuit or the like against the response speed of the structure and attains the correspondences of large inputs through small inputs, and the second term in the above equation gives a damping property to the side of the additional mass body as well to attain stability thereof by adding the product of a gain G₂ (negative sign) to a vibration speed on the side of the additional mass body to the control force.

In response to the above defined AMD, some studies have been made which try to add a spring having a spring constant k_{d} in parallel with the control force due to the actuator as shown in the vibration model of Fig. 8 and to obtain a vibration control effect to the same degree with that of the AMD by means of a less control force in comparison with that of the AMD [designated as ATMD (the abbreviation of Active Tuned Mass Damper) thereafter].

In an ATMD, a spring constant k_{d} is set so that the vibration of an additional mass body may synchronize with that of a structure, that is,${\text{ω}}_{\text{d}} {\text{= ω}}_{\text{1}}$ and the resulting control force u (t) is, for example, given by the following equation,${\text{u(t) = G}}_{\text{1}} {\text{(dx}}_{\text{1}} {\text{/dt) + G}}_{\text{2}} {\text{(dx}}_{\text{d}} {\text{/dt) + G}}_{\text{3}} {\text{(x}}_{\text{1}} {\text{- x}}_{\text{d}} \text{)}$ wherein G3 is a gain having a negative sign and cancels a part of the inertial force applying on the additional mass body at a vibration time due to the third term in the above equation so that the additional mass body may be vibrated by a less control force.

Furthermore, there is a disclosure in Japanese Pat. Publication No. 3-70075 with reference to a form for controlling the structural vibration due to earthquake or the like by an extremely small control force by connecting a second additional mass body having a mass less than that of the additional mass body of DD to the additional mass body of DD through a spring and an actuator and applying a control force to the second additional mass body from the actuator, as it were, an active type vibration control device in a form of a double dynamic damper.

The conventional vibration control device as described above has an advantage in that the DD needs no energy supply to the device, but the vibration control effect is determined by the mass ratio of the structure to the additional mass body. Therefore, the DD needs the additional mass body with a large mass, and any significant vibration control effects can be hardly expected.

It can be expected for the AMD to get a large control effect by using an additional mass body with a less mass in comparison with that of the DD. However, since an energy supply is necessary, the design of a control circuit for applying a predetermined control force corresponding to the responses of the structure and the additional mass body at the vibration time, the security of the stability of a device and the management for the prevention of misoperation will become necessary, in addition to the facilities and the device for such an energy supply.

As described above, the ATMD has an advantage in that a control force can be lessened in comparison with that of the AMD, but the ATMD has the similar disadvantages to those of the AMD. The ATMD can easily produce noise and vibration problems since the device for applying the control force directly adopts a reaction force to the structure.

The present invention has attained the solution for the problems in the conventional vibration control devices. An object of the present invention is to provide a compact vibration control device with high reliability and safety which produces no vibration and noise problems like the AMD, is operated by a further smaller supply energy and control force than those of the ATMD, and can effectively restrict the vibration of a structure against earthquake or the like.

### (Disclosure of the Invention)

The present invention provides a vibration control device as set forth in claim 1.

A vibration control device of the present invention assumes an additional mass body in the basic constitution of the above-described DD as a first additional mass body, corresponds to what is added with a second additional mass body constituting the above-described ATMD to the first additional mass body and constitutes a double dynamic damper of an active type.

The first additional mass body having a predetermined mass mₐ is supported by a support body having a predetermined spring constant kₐ and a predetermined damping coefficient cₐ such as high damping laminated rubber and provided at the top portion or the other appropriate places of the structure.

The second additional mass body having a predetermined mass m_{b} constitutes a movable driver relative to the first additional mass body by a control force u(t) and the driver is connected to the first additional mass body through a spring having a predetermined spring constant k_{b}.

In case where a large-size structure, such as a multi-story building or a super multi-story building, is subjected to vibration control, the mass of the first additional mass body is equal to, e.g., about 1/500 through 1/1000 of the mass of the structure, and steel can be used as a material. The mass of the first additional mass body is not always restricted within the above-defined range, but it seems to be hard to obtain a sufficient vibration control effect without performing a considerably effective control in case where the mass of the first additional mass body is not more than 1/1000 of the mass of the structure. In addition, there is a risk of not following up the object of the invention in the present application for obtaining a large vibration control effect by an extremely small energy supply and control force in case where a vibration control device having a weight of 1/500 or more of the total structural weight is installed to a large-size structure, and the influences on the design of a structure itself become large.

The material for the first additional mass body is not necessarily restricted to steel, and the material is, in particular, not restricted if a predetermined mass can be obtained, the size does not become too large, and the cost does not become too high.

The support body is not always restricted to high damping laminated rubber, but in case of the high damping laminated rubber, there is an advantage in that the spring constant kₐ to be target and the high damping coefficient cₐ are easily obtained. Consequently, a variety of forms such as the combination between an air spring and a damping material, and the combination between a normal laminated rubber for base isolation and an elastoplastic damper are possible so long as a predetermined spring capacity and damping capacity can be obtained. The present invention, however, has a constitution that the damping coefficient cₐ in the support body, as will be described later in detail, is taken considerably larger than that in case of the DD, and the first additional mass body is vibrated by a force received from the driver.

The mass of the driver as the second additional mass body is arranged as, e.g., 1/20 through 1/100 of the mass of the first additional mass body, and the driver is driven by, e.g., an electromagnetic force from a linear motor or a hydraulic pressure from a hydraulic cylinder. The mass of the driver is not always restricted to the above-defined range, but it is considered that the above-defined range is preferable in connection with a drive mechanism and a vibration control effect.

With reference to the spring force for acting between the driver and the first additional mass body, it is possible to directly use a spring material.
However, in the present invention, a curved surface in a form of a downward circular arc is formed on the first additional mass body and is set as a travel surface of the driver, a spring force for realizing a predetermined vibration frequency in a form of potential energy is acted. In the present invention, the response speed (dx₁/dt) of the structure is fed back.

Since the above-described control frequently feeds back the response acceleration of the structure as a control force applied on the driver, a large vibration control effect can be expected by using the control force represented by, e.g., the following equation.${\text{u(t) = G}}_{\text{1}} {\text{(d}}^{\text{2}} {\text{x}}_{\text{1}} {\text{/dt}}^{\text{2}} {\text{) + G}}_{\text{2}} {\text{(dx}}_{\text{b}} \text{/dt)} {\text{+ G}}_{\text{3}} {\text{(x}}_{\text{b}} {\text{-x}}_{\text{a}} \text{)}$ wherein,
G₁, G₂ or G₃ is a predetermined gain in each term of the above equation (1),
(d²x₁/dt²) is a response acceleration of the structure,
(dx_{b}/dt) is a speed of the first additional mass body, and
(x_{b}-xₐ) is a relative displacement of the first additional mass body to the driver.

As for what feeds back the response speed of the structure, a large vibration control effect can be expected by using the control force represented by, e.g., the following equation,${\text{u(t) = G}}_{\text{1}} {\text{'(dx}}_{\text{1}} {\text{/dt) + G}}_{\text{2}} {\text{'(x}}_{\text{a}} {\text{-x}}_{\text{1}} {\text{) + G}}_{\text{3}} {\text{'(dx}}_{\text{b}} \text{/dt)} {\text{+ G}}_{\text{4}} {\text{'(x}}_{\text{b}} {\text{-x}}_{\text{a}} \text{)}$ wherein,
G₁, G₂, G₃, or G₄, is a predetermined gain in each term of the above equation (3),
(dx₁/dt) is a response speed of the structure,
(xₐ-x₁) is a relative displacement of the first additional mass body to the structure,
(dx_{b}/dt) is a speed of the first additional mass body, and
(x_{b}-xₐ) is a relative displacement of the first additional mass body to the driver.

With reference to the control force described above, the further details will described later in connection with an embodiment.

### (Brief Description of the Drawings)

Fig. 1 is a plan view showing an external form of a vibration control device as an embodiment of the present invention;
Fig. 2 is a sectional view taken along line X-X'in Fig. 1;
Fig. 3 is a sectional view taken along line Y-Y'in Fig. 1;
Fig. 4 is a vibration model diagram showing a vibration control device of the present invention;
Fig. 5 is a block diagram showing the partial constitution of a control circuit as an embodiment of the present invention;
Fig. 6 is a vibration model diagram showing a prior art DD as a comparative;
Fig. 7 is a vibration model diagram showing a prior art AMD as a comparative; and
Fig. 8 is a vibration model diagram showing an ATMED as a comparative.

### (Best Mode for Embodying the Invention)

Referring now to illustrated embodiments, the detailed description will be given in the following.

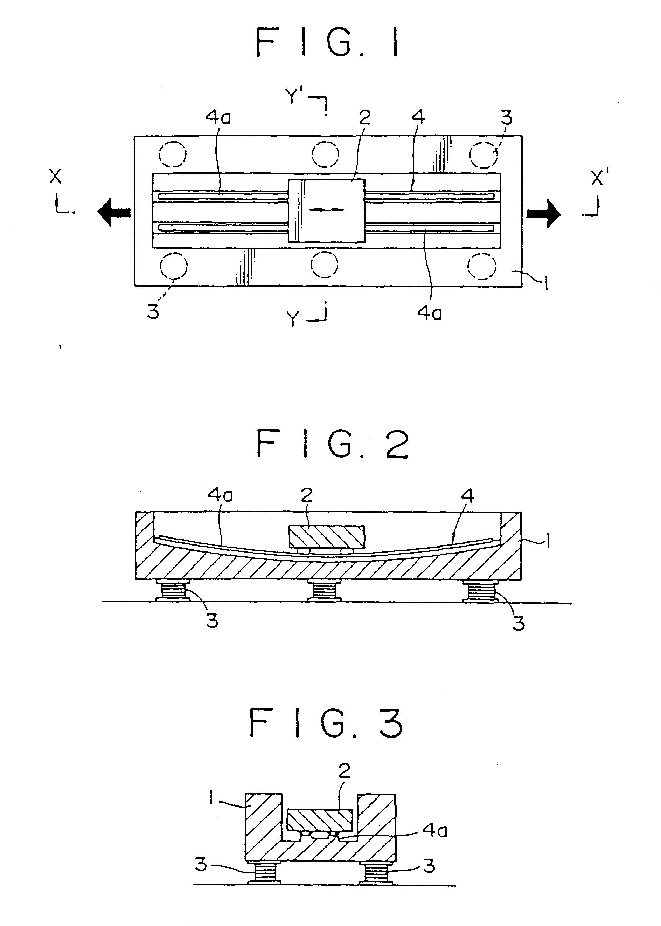

Figs. 1 through 3 show a structure of a vibration control device as an embodiment of the present invention.

A main body 1 of the vibration control device as a first additional mass body is composed of a steel member used both for an external frame for accepting a driver 2 and has a weight of approximately 1/500 through 1/1000 of the total weight of the structure which becomes an object of the vibration control.

The driver 2 as a second additional mass body has a weight of approximately 1/20 through 1/100 of the weight of the main body 1 of the vibration control device and travels on the main body 1 by a driving force from a linear motor or the like. The travel surface 4 of the driver 2 is a curved surface (4a in the figure indicates a rail) and a spring force is given in a form of potential energy by the curved surface so as to adjust a period thereof to the natural period of a building.

The main body 1 is supported by a support body 3 composed of a plurality of high damping laminated rubbers distributed and provided to the structure.

As for a specific numerical embodiment, in case where the total weight of a structure is 100,000 tons or more, such a design as the main body 1 of the vibration control device having approximately 100 tons and the driver 2 having approximately 5 tons may be considered. In this case, for example, the longer side in the main body 1 of the vibration control device becomes approximately 8 through 10 m and the support body 3 composed of the high damping laminated rubbers is approximately 60 through 70 cm in height and horizontally displaceable by 40 through 50 cm. In addition, in case where the primary natural period of the structure is, e.g., 5 seconds, the primary period in the main body 1 of the vibration control device is set so as to become approximately 5 seconds with respect to the support body 3 for supporting the main body 1 of the vibration control device. In case where the travel surface has a circular arc and there is no friction, the radius of the curvature of the travel surface may be set so as to be approximately 6.2 m.

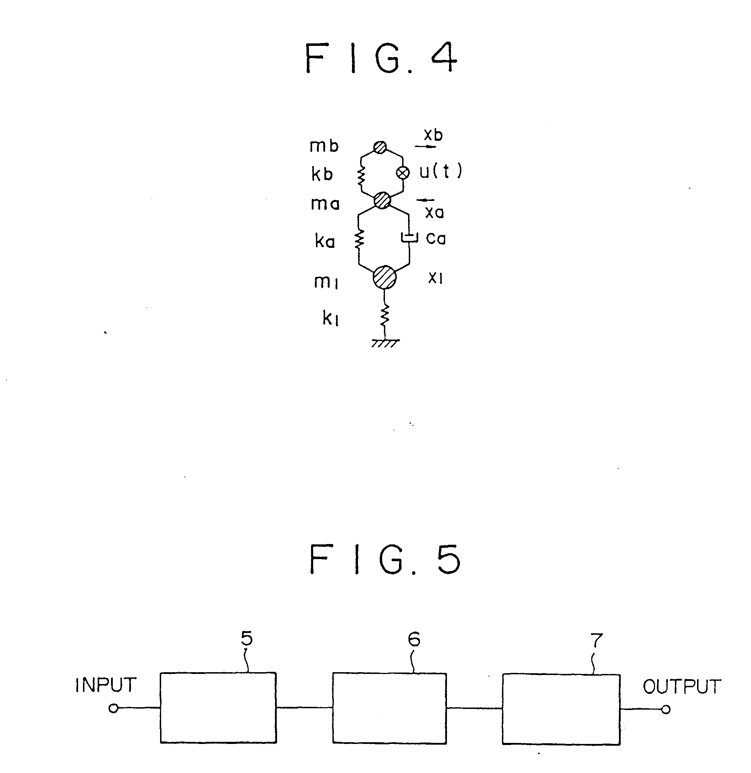

Fig. 4 illustrates the vibration control device of the present invention as a vibration model.

In the figure, m₁ represents the mass of a structure constituting a main vibration system, mₐ represents the mass of the main body of the vibration control device and m_{b} represents the mass of the driver, respectively. In addition, k₁ is a spring constant to the main body of the structure, kₐ is a spring constant of the support body, cₐ is a damping coefficient of the support body, k_{b} is a spring constant between the main body of the vibration control device and the driver afforded depending on the shape of the curved surface in the travel surface, and u(t) is a control force, respectively. Further, x₁ represents a displacement of the structure, xₐ represents a displacement of the main body of the vibration control device, and x_{b} represents a displacement of a driving portion, respectively.

By using the parameters in Fig.4, angular frequencies ω₁, ωₐ and ω_{b} of the main vibration system, the main body of the vibration control device and the driver, respectively, are represented by:${\text{ω}}_{\text{1}} {\text{= (k}}_{\text{1}} {\text{/m}}_{\text{1}} {\text{)}}^{\text{1/2}}$${\text{ω}}_{\text{a}} {\text{= (k}}_{\text{a}} {\text{/m}}_{\text{a}} {\text{)}}^{\text{1/2}}$${\text{ω}}_{\text{b}} {\text{= (k}}_{\text{b}} {\text{/m}}_{\text{b}} {\text{)}}^{\text{1/2}}$

Then, by synchronizing these angular frequencies, the relation of the following equation is established.${\text{ω}}_{\text{1}} {\text{≒ ω}}_{\text{a}} {\text{≒ ω}}_{\text{b}}$

Subsequently, a relationship of the mass of the structure as described above, that of the main body of the vibration control device and that of the driver can be represented by:${\text{m}}_{\text{a}} {\text{/m}}_{\text{1}} \text{= 1/500 through 1/1000}$${\text{m}}_{\text{b}} {\text{/m}}_{\text{a}} \text{= 1/10 through 1/100}$

Furthermore, a damping coefficient cₐ in the main body of the vibration control device can be represented by:${\text{c}}_{\text{a}} {\text{= 2m}}_{\text{a}} {\text{ω}}_{\text{a}} {\text{h}}_{\text{a}}$

In the above equation, hₐ is a damping factor of the support body and a large damping factor of as much as hₐ = 10% to 50% is used in the design of the support body from the reason which will be described later.

The control force for controlling the motion of the driver in the vibration control device is defined by the following equation:${\text{u(t) = G}}_{\text{1}} {\text{(d}}^{\text{2}} {\text{x}}_{\text{1}} {\text{/dt}}^{\text{2}} {\text{) + G}}_{\text{2}} {\text{(dx}}_{\text{b}} \text{/dt)} {\text{+ G}}_{\text{3}} {\text{(x}}_{\text{b}} {\text{-x}}_{\text{a}} \text{)}$ wherein G₁, G₂ or G₃ is gain in each term of the above equation (1).

Energy is mainly exhausted by the damper function (damping coefficient cₐ) of the support body.

Since the angular frequency ωₐ of the main body of the vibration control device is in synchronization with the angular frequency ω₁ of the main vibration system, a dynamic damper is formed. However, the damping coefficient cₐ is enlarged enough more than the optimum design value. No dynamic damper normally acts in this state.

Then, when the control force u(t) is applied and the main body of the vibration control device (mass mₐ) is vibrated, the main body of the vibration control device (mass mₐ) moves far larger than the normal DD (Dynamic Damper), and therefore, the vibration control effect is increased.

Even in case where the response acceleration of the structure constituting the main vibration system is small, the gain G₁ in the first term of the above equation (1) has a function for giving a control force in a form of amplifying the response acceleration, and as a result, the vibration control effect can be increased.

The reaction force of the control force u(t) is treated by using the inertia force of the driver (mass m_{b} = 1/10 mₐ through 1/100 mₐ) loaded on the main body of the vibration control device.

The second term in the above equation (1) is a term for affording a damping property to the driver 1 by using a relation between the action and the reaction, and therefore, the stability of the vibration of the driver can be attained. In a state for causing to synchronize the angular frequency ωₐ of the main body of the vibration control device with the angular frequency ω₁ of the main vibration system, the gain G₂ can be represented by:${\text{G}}_{\text{2}} {\text{= 2m}}_{\text{b}} {\text{ω}}_{\text{1}} \text{h}$ and also be set so that the damping coefficient h may become within the range of 0.1 through 0.2 (10% through 20%).

Additionally, by making use of the principle of ATMD described above, the angular frequency ω_{b} of the driver is kept synchronized with the angular frequency ω₁ of the main vibration system. Then, since the spring force (spring constant k_{b}) absorbs the most of the force required for the control, the necessary force for the control is further lessened.

In other words, the control force [u(t)], the inertia force [m_{b}(dx_{b}/dt)²] and the spring force [k_{b}(x_{b}-xₐ)] act on the driver, and the following relation in given by:$\text{(Control Force) + (Inertia Force) + (Spring Force) = 0}$

Since the inertia force and the spring force almost cancel with each other in the above equation, the control force becomes extremely small.

In this case, a synchronizing angular frequency ω_{b}'(=[(k_{b}+G₃)/m_{b}]^{1/2}) created by the gain G₃ (a negative value, e.g., approximately -k_{b} x 0.9 or -k_{b} x 0.8 being chosen) in the third term of the above equation (1), is set so as to be not more than a half of the angular frequency ω_{b} of the driver.

As a result, a synchronization is created to the period component of, e.g., approximately 16 seconds (in case of G₃ = -k_{b} x 0.9), in addition to the period component of 5 seconds of the response acceleration of a structure to be used as an input, and it is necessary to provide an appropriate filter to the gain G₁ so as to reduce the control force.

The filter examined by the control of a conventional ATMD is such as a high-pass filter, but since a normal high-pass filter has a large out-of-phase, it is the case that a cut-off frequency has to be considerably apart and that no sufficient effect has not been obtained. Therefore, any devices are required for a filter having a sharp characteristic without any out-of-phase.

Fig. 5 is block diagram showing a part of a control circuit as an embodiment of the present invention and corresponds to the first term in the above equation (1).

Any inputs in this case are the response acceleration of the structure by earthquake, wind or the like and amplified by a circuit composed of a filter circuit 5, an AGC circuit 6 and a limiter circuit 7. In addition, Fig. 5 shows a simplified state of these circuits, and the filter circuit 5 or the like may be used by overlapping in plural numbers.

There is no out-of-phase in the neighborhood of an objective vibration frequency in the filter circuit 5. The filter circuit 5 has a sharp characteristic and a transfer characteristic thereof is given by e.g., the following Laplace function.${\text{H(s) = (s}}^{\text{2}} {\text{+2Gξ}}_{\text{n}} {\text{ω}}_{\text{n}} {\text{s + ω}}_{\text{n}} {\text{}}^{\text{2}} {\text{)/(s}}^{\text{2}} {\text{+2ξ}}_{\text{n}} {\text{ω}}_{\text{n}} {\text{s + ω}}_{\text{n}} {\text{}}^{\text{2}} \text{)}$

The output multiplied by gain G (e.g., a value multiplied by about 20) is obtained thereby at the objective angular frequency (corresponding to a primary angular frequency of the structure) ωₙ, and there is no out-of-phase at this angular frequency. ξₙ is a damping factor and takes a value, e.g., within the range of 0.2 through 0.5 (20% through 50%). Likewise, the out-of-phase is not created even in high and low frequency ranges but only created before or after the objective angular frequency. By the use of this filter, the control displacement and the control force required for the above control method are remarkably reduced.

The AGC circuit 6 is normally used for audio circuits or the like. However, by adopting this circuit, the vibrations ranging from a large input to a small input can be handled and the vibration control effect can be enhanced.

However, since the AGC circuit 6 alters the amplification factor while the AGC circuit is accompanied by a time delay to some extent, the output is restricted by the limiter circuit 7 so as to prevent any excessive output signals from generating in particular for the early stage of vibration.

The control force for controlling the action of the driver as the second additional mass body is not always restricted to the above equation (1), and the control force can also be defined by, e.g., the following equation,${\text{u(t) = G}}_{\text{1}} {\text{'(dx}}_{\text{1}} {\text{/dt) + G}}_{\text{2}} {\text{'(x}}_{\text{a}} {\text{-x}}_{\text{1}} \text{)} {\text{+ G}}_{\text{3}} {\text{'(dx}}_{\text{b}} {\text{/dt) + G}}_{\text{4}} {\text{'(x}}_{\text{b}} {\text{-x}}_{\text{a}} \text{)}$ wherein G₁', G₂', G₃' or G₄' is a gain in each term of the above equation (3).

In case of the above equation (3), the speed (dx₁/dt) of the structure is fed back.

The control described above is applied to any highly frequent earthquake or strong wind. For a larger earthquake over the capacity of the device, such a structure as stops the drive of the second additional mass body might also be possible for preventing the damage of the device. Even in this case, the structure may be allowed to function as a passive type dynamic damper, and a vibration control effect as a dynamic damper can be obtained.

### (Possibility of Industrial Utilization)

By installing the vibration control device of the present invention to a structure, the following advantages and effects will be obtained.
① A large vibration control effect due to the drive of an extremely small mass body can be obtained by setting a DD as a basic structure, adding the constitution of an ATMD having a driver to this basic structure and using a control circuit employing a response acceleration as an input thereof.
② By making an effective use of a support body composed of a passive damping material for the main body of a vibration control device constituting a first additional mass body, by adopting such a constitution to substitute a control force for a spring force and by improving a filter within a control circuit, the control force as well as a quantity of energy supply required for the control can be extremely lessened.
③ Since the main body of the control device is installed to the structure through a support body with a high damping performance, such as high damping laminated rubbers and the driving portion does not take any system for transmitting a reaction force directly to the structure body, the problems of noise and vibration from the drive device are now improved, although such problems have been once the issues in the conventional AMD, ATMD or the like.
④ In view of the following points: the driver can be installed within the internal portion of the main body of the vibration control device; the main body of the vibration control device is supported by a support body with a high damping performance; the mass of the driver is very small in comparison with that of the structure; and the maximum control force is small since the drive device is miniaturized, no possible influence on the main body of the structure is available at all, even though any running-away might happen at the driving portion.
⑤ Any vibration controls ranging from large inputs to small inputs become possible by incorporating an AGC circuit or the like in the control circuit.

## Claims

1. A vibration control device for a structure, comprising:
a first additional mass body (1) with a predetermined mass mₐ;
a support body (3) for supporting said first additional mass body (1) relative to the structure;
wherein said support body (3) has both a spring constant kₐ for giving a predetermined period corresponding to the natural period of said structure to said first additional mass body (1) and a predetermined damping coefficient cₐ;
characterised by :
a driver (2) with a predetermined mass m_{b} as a second additional mass body travelling on a curved surface (4) formed on said first additional mass body (1) under a control force u(t);
said curved surface (4) having a downward circular arc shape for giving a predetermined period corresponding to the natural period of said structure to the free vibration of said driver (2).

2. A vibration control device for a structure according to claim 1, wherein the mass of said first additional mass body is 1/500 through 1/1000 of the mass of said structure.

3. A vibration control device for a structure according to claim 2, wherein the mass of said driver is 1/20 through 1/100 of the mass of said first additional mass body.

4. A vibration control device for a structure according to claim 1, wherein said support body is a plurality of distributively placed high-damping laminated rubbers.

5. A vibration control device for a structure according to claim 4, wherein the mass of said first additional mass body is 1/500 through 1/1000 of the mass of said structure.

6. A vibration control device for a structure according to claim 5, wherein the mass of said driver is 1/20 through 1/100 of the mass of said first additional mass body.

7. A vibration control device for a structure according to claim 1, wherein said control force u(t) is given by the following equation:${\text{u(t) = G}}_{\text{1}} {\text{(d}}^{\text{2}} {\text{x}}_{\text{1}} {\text{/dt}}^{\text{2}} {\text{)+G}}_{\text{2}} {\text{(dx}}_{\text{b}} {\text{/dt)+G}}_{\text{3}} {\text{(x}}_{\text{b}} {\text{-x}}_{\text{a}} \text{)}$ wherein,
G₁, G₂ or G₃ is a predetermined gain in each term of said equation (1);
(d²x₁/dt²) is response acceleration of said structure;
(dx_{b}/dt) is a speed of said first additional mass body; and
(x_{b}-xₐ) is a relative displacement of said driver to said first additional mass body, respectively.

8. A vibration control device for a structure according to claim 7, wherein said support body is a plurality of distributively placed high-damping laminated rubbers.

9. A vibration control device for a structure according to claim 8, wherein the mass of said first additional mass body is 1/500 through 1/1000 of the mass of said structure.

10. A vibration control device for a structure according to claim 9, wherein the mass of said driver is 1/20 through 1/100 of the mass of said first additional mass body.

11. A vibration control device for a structure according to claim 7, wherein the gain G₁ in said equation (1) is a gain obtained by a circuit having a filter circuit for extracting a predetermined period component of the response acceleration of said structure, an AGC circuit and a limiter circuit for output limitation.

12. A vibration control device for a structure according to claim 11, wherein said filter circuit is allowed to have a transfer characteristic for almost cutting the period component corresponding to the synchronizing angular frequency:${\text{ω}}_{\text{b}} {\text{' = [(k}}_{\text{b}} {\text{+G}}_{\text{3}} {\text{)/m}}_{\text{b}} {\text{]}}^{\text{1/2}}$ of said driver generated by the gain G₃ in said equation (1) in the response acceleration of said structure.

13. A vibration control device for a structure according to claim 1, wherein said control force u(t) is given by the following equation:${\text{u(t) = G}}_{\text{1}} {\text{'(dx}}_{\text{1}} {\text{/dt) + G}}_{\text{2}} {\text{'(x}}_{\text{a}} {\text{-x}}_{\text{1}} {\text{) + G}}_{\text{3}} {\text{'(dx}}_{\text{b}} \text{/dt)} {\text{+ G}}_{\text{4}} {\text{'(x}}_{\text{b}} {\text{-x}}_{\text{a}} \text{)}$ wherein,
G₁', G₂', G₃' or G₄' is a predetermined gain in each term of said equation (3);
(dx₁/dt) is a response acceleration of said structure;
(xₐ-x₁) is a relative displacement of said first additional mass body to said structure;
(dx_{b}/dt) is a speed of said first additional mass body; and
(x_{b}-xₐ) is a relative displacement of said driver to said first additional mass body, respectively.

## Patentansprüche

1. Schwingungssteuervorrichtung für ein Gebäude, aufweisend:
einen ersten zusätzlichen Massekörper (1) mit einer vorgegebenen Masse mₐ;
einen Tragkörper (3), um den ersten zusätzlichen Massekörper (1) relativ zu dem Gebäude zu tragen;
wobei der Tragkörper (3) sowohl eine Federkonstante kₐ hat, um dem ersten zusätzlichen Massekörper (1) eine vorgegebene Periode zu geben, die der Eigenperiode des Gebäudes entspricht, als auch einen vorgegebenen Dämpfungskoeffizienten cₐ hat;
gekennzeichnet durch:
einen Treiber (2) mit einer vorgegebenen Masse m_{b} als zweiter zusätzlicher Massekörper, der sich unter Einwirkung einer Steuerkraft u(t) auf einer auf dem ersten zusätzlichen Massekörper (1) gebildeten, gekrümmten Oberfläche (4) hin- und herbewegt;
wobei die gekrümmte Oberfläche (4) die Form eines nach unten gewölbten Kreisbogens hat, um der freien Schwingung des Treibers (2) eine vorgegebene Periode zu geben, die der Eigenperiode des Gebäudes entspricht.

2. Schwingungssteuervorrichtung für ein Gebäude, gemäß Anspruch 1, wobei die Masse des ersten zusätzlichen Massekörpers 1/500 bis 1/1000 der Masse des Gebäudes beträgt.

3. Schwingungssteuervorrichtung für ein Gebäude, gemäß Anspruch 2, wobei die Masse des Treibers 1/20 bis 1/100 der Masse des ersten zusätzlichen Massekörpers beträgt.

4. Schwingungssteuervorrichtung für ein Gebäude, gemäß Anspruch 1, wobei der Tragkörper aus einer Vielzahl von verteilt angeordneten, hochdämpfenden, laminierten Gummischichten besteht.

5. Schwingungssteuervorrichtung für ein Gebäude, gemäß Anspruch 4, wobei die Masse des ersten zusätzlichen Massekörpers 1/500 bis 1/1000 der Masse des Gebäudes beträgt.

6. Schwingungssteuervorrichtung für ein Gebäude, gemäß Anspruch 5, wobei die Masse des Treibers 1/20 bis 1/100 der Masse des ersten zusätzlichen Massekörpers beträgt.

7. Schwingungssteuervorrichtung für ein Gebäude, gemäß Anspruch 1, wobei die Steuerkraft u(t) durch die folgende Gleichung wiedergegeben wird:${\text{u(t) = G}}_{\text{1}} {\text{(d}}^{\text{2}} {\text{x}}_{\text{1}} {\text{/dt}}^{\text{2}} {\text{) + G}}_{\text{2}} {\text{(dx}}_{\text{b}} {\text{/dt) + G}}_{\text{3}} {\text{(x}}_{\text{b}} {\text{-x}}_{\text{a}} \text{)}$ wobei
G₁, G₂ oder G₃ eine vorgegebene Verstärkung bei jedem Ausdruck der Gleichung (1) ist;
(d²x₁/dt²) die Reaktionsbeschleunigung des Gebäudes ist;
(dx_{b}/dt) die Geschwindigkeit des ersten zusätzlichen Massekörpers ist; und
(x_{b}-xₐ) die relative Verschiebung des Treibers bezüglich des ersten zusätzlichen Massekörpers ist.

8. Schwingungssteuervorrichtung für ein Gebäude, gemäß Anspruch 7, wobei der Tragkörper aus einer Vielzahl von verteilt angeordneten, hochdämpfenden, laminierten Gummischichten besteht.

9. Schwingungssteuervorrichtung für ein Gebäude, gemäß Anspruch 8, wobei die Masse des ersten zusätzlichen Massekörpers 1/500 bis 1/1000 der Masse des Gebäudes beträgt.

10. Schwingungssteuervorrichtung für ein Gebäude, gemäß Anspruch 9, wobei die Masse des Treibers 1/20 bis 1/100 der Masse des ersten zusätzlichen Massekörpers beträgt.

11. Schwingungssteuervorrichtung für ein Gebäude, gemäß Anspruch 7, wobei die Verstärkung G₁ in der Gleichung (1) eine Verstärkung ist, die durch eine Schaltung erhalten wird, die eine Filterschaltung, um eine vorgegebene Periodenkomponente der Reaktionsbeschleunigung des Gebäudes zu extrahieren, eine AGC-Schaltung, und eine Begrenzerschaltung für die Ausgangssignalbegrenzung umfaßt.

12. Schwingungssteuervorrichtung für ein Gebäude, gemäß Anspruch 11, wobei die Filterschaltung eine Transferkennlinie haben kann, um die Periodenkomponente beinahe abzuschneiden, die der synchronisierenden Winkel frequenz:${\text{ω}}_{\text{b}} {\text{' = [(k}}_{\text{b}} {\text{+G}}_{\text{3}} {\text{)/m}}_{\text{b}} {\text{]}}^{\text{1/2}}$ des Treibers entspricht, die durch die Verstärkung G₃ in der Gleichung (1) bei der Reaktionsbeschleunigung des Gebäudes erzeugt wird.

13. Schwingungssteuervorrichtung für ein Gebäude, gemäß Anspruch 1, wobei die Steuerkraft u(t) durch die folgende Gleichung wiedergegeben wird:${\text{u(t) = G}}_{\text{1}} {\text{'(dx}}_{\text{1}} {\text{/dt) + G}}_{\text{2}} {\text{'(x}}_{\text{a}} {\text{-x}}_{\text{1}} {\text{) + G}}_{\text{3}} {\text{'(dx}}_{\text{b}} {\text{/dt) + G}}_{\text{4}} {\text{'(x}}_{\text{b}} {\text{-x}}_{\text{a}} \text{)}$ wobei
G₁', G₂', G₃' oder G₄' eine vorgegebene Verstärkung bei jedem Ausdruck der obigen Gleichung (3) ist;
(dx₁/dt) die Reaktionsgeschwindigkeit des Gebäudes ist;
(xₐ-x₁) die relative Verschiebung des ersten zusätzlichen Massekörpers bezüglich des Gebäudes ist;
(dx_{b}/dt) die Geschwindigkeit des ersten zusätzlichen Massekörpers ist; und
(x_{b}-xₐ) die relative Verschiebung des Treibers bezüglich des ersten zusätzlichen Massekörpers ist.

## Revendications

1. Dispositif de contrôle de vibration pour une structure, comprenant:
un premier corps d'apport de masse supplémentaire (1) présentant une masse prédéterminée mₐ;
un corps de support (3) pour supporter ledit premier corps d'apport de masse supplémentaire (1) par rapport à la structure;
dans lequel ledit corps de support (3) présente à la fois une constante élastique kₐ pour conférer une période prédéterminée correspondant à la période naturelle de ladite structure audit premier corps d'apport de masse supplémentaire (1) et un coefficient d'amortissement prédéterminé cₐ;
caractérisé par:
un moyen d'entraînement (2) présentant une masse prédéterminée m_{b} en tant que second corps d'apport de masse supplémentaire se déplaçant sur une surface incurvée (4) formée sur ledit premier corps d'apport de masse supplémentaire (1) sous une force de commande u(t);
ladite surface incurvée (4) présentant une forme d'arc circulaire dirigé vers le bas pour conférer une période prédéterminée correspondant à la période naturelle de ladite structure à la vibration libre dudit moyen d'entraînement (2).

2. Dispositif de contrôle de vibration pour une structure selon la revendication 1, dans lequel la masse dudit premier corps d'apport de masse supplémentaire est comprise entre 1/500-ième et 1/1000-ième de la masse de ladite structure.

3. Dispositif de contrôle de vibration pour une structure selon la revendication 2, dans lequel la masse dudit moyen d'entraînement est comprise entre 1/20-ième et 1/100-ième de la masse dudit premier corps d'apport de masse supplémentaire.

4. Dispositif de contrôle de vibration pour une structure selon la revendication 1, dans lequel ledit corps de support est constitué par une pluralité de caoutchoucs stratifiés hautement amortisseurs placés de façon distributive.

5. Dispositif de contrôle de vibration pour une structure selon la revendication 4, dans lequel la masse dudit premier corps d'apport de masse supplémentaire est comprise entre 1/500-iéme et 1/1000-ième de la masse de ladite structure.

6. Dispositif de contrôle de vibration pour une structure selon la revendication 5, dans lequel la masse dudit moyen d'entraînement est comprise entre 1/20-ième et 1/100-ième de la masse dudit premier corps d'apport de masse supplémentaire.

7. Dispositif de contrôle de vibration pour une structure selon la revendication 1, dans lequel ladite force de commande u(t) est donnée par l'équation qui suit:${\text{u(t) = G}}_{\text{1}} {\text{(d}}^{\text{2}} {\text{x}}_{\text{1}} {\text{/dt}}^{\text{2}} {\text{)+G}}_{\text{2}} {\text{(dx}}_{\text{b}} {\text{/dt)+G}}_{\text{3}} {\text{(x}}_{\text{b}} {\text{-x}}_{\text{a}} \text{)}$ où respectivement:
G₁, G₂ ou G₃ est un gain prédéterminé dans chaque terme de ladite équation (1);
(d²x₁/dt²) est une accélération de réponse de ladite structure;
(dx_{b}/dt) est une vitesse dudit premier corps d'apport de masse supplémentaire; et
(x_{b}-xₐ) est un déplacement relatif dudit moyen d'entraînement par rapport audit premier corps d'apport de masse supplémentaire.

8. Dispositif de contrôle de vibration pour une structure selon la revendication 7, dans lequel ledit corps de support est constitué par une pluralité de caoutchoucs stratifiés hautement amortisseurs placés de façon distributive.

9. Dispositif de contrôle de vibration pour une structure selon la revendication 8, dans lequel la masse dudit premier corps d'apport de masse supplémentaire est comprise entre 1/500-ième et 1/1000-iéme de la masse de ladite structure.

10. Dispositif de contrôle de vibration pour une structure selon la revendication 9, dans lequel la masse dudit moyen d'entraînement est comprise entre 1/20-ième et 1/100-ième de la masse dudit premier corps d'apport de masse supplémentaire.

11. Dispositif de contrôle de vibration pour une structure selon la revendication 7, dans lequel le gain G₁ dans ladite équation (1) est un gain obtenu par un circuit comportant un circuit de filtre pour extraire une composante de période prédéterminée de l'accélération de réponse de ladite structure, un circuit CAG (commande automatique de gain) et un circuit de limiteur pour émettre en sortie une limitation.

12. Dispositif de contrôle de vibration pour une structure selon la revendication 11, dans lequel ledit circuit de filtre est autorisé à présenter une caractéristique de transfert pour pratiquement couper la composante de période correspondant à la fréquence angulaire de synchronisation:${\text{ω}}_{\text{b}} {\text{' = [(k}}_{\text{b}} {\text{+G}}_{\text{3}} {\text{)/m}}_{\text{b}} {\text{]}}^{\text{1/2}}$ dudit moyen d'entraînement générée par le gain G₃ dans ladite équation (1) dans l'accélération de réponse de ladite structure.

13. Dispositif de contrôle de vibration pour une structure selon la revendication 1, dans lequel ladite force de commande u(t) est donnée par l'équation qui suit:${\text{u(t) = G}}_{\text{1}} {\text{'(dx}}_{\text{1}} {\text{/dt) + G}}_{\text{2}} {\text{'(x}}_{\text{a}} {\text{-x}}_{\text{1}} {\text{) + G}}_{\text{3}} {\text{'(dx}}_{\text{b}} {\text{/dt) + G}}_{\text{4}} {\text{'(x}}_{\text{b}} {\text{-x}}_{\text{a}} \text{)}$ où respectivement:
G₁', G₂', G₃' ou G₄' est un gain prédéterminé dans chaque terme de ladite équation (3);
(dx₁/dt) est une accélération de réponse de ladite structure;
(xₐ-x₁) est un déplacement relatif dudit premier corps d'apport de masse supplémentaire par rapport à ladite structure;
(dx_{b}/dt) est une vitesse dudit premier corps d'apport de masse supplémentaire; et
(x_{b}-xₐ) est un déplacement relatif dudit moyen d'entraînement par rapport audit premier corps d'apport de masse supplémentaire.
